(19) **Europäisches Patentamt / European Patent Office / Office européen des brevets**

(11) **EP 3 368 872 B1**

(12) **EUROPÄISCHE PATENTSCHRIFT**

(45) Veröffentlichungstag und Bekanntmachung des Hinweises auf die Patenterteilung:
**17.04.2024 Patentblatt 2024/16**

(21) Anmeldenummer: **16794944.5**

(22) Anmeldetag: **27.10.2016**

(51) Internationale Patentklassifikation (IPC):
**G01J 3/46** (2006.01)   **G06N 3/02** (2006.01)

(52) Gemeinsame Patentklassifikation (CPC):
**G01J 3/463; G01J 3/46; G01J 3/462; G06N 3/084;**
G01N 2201/1296

(86) Internationale Anmeldenummer:
**PCT/EP2016/025131**

(87) Internationale Veröffentlichungsnummer:
**WO 2017/071824 (04.05.2017 Gazette 2017/18)**

(54) **VERFAHREN ZUM ERMITTELN VON TEXTURPARAMETERN EINES LACKS**

METHOD FOR ASCERTAINING TEXTURE PARAMETERS OF A PAINT

PROCÉDÉ DE DÉTERMINATION DE PARAMÈTRES DE TEXTURE D'UNE PEINTURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2015 DE 102015118551**
**29.10.2015 US 201562247837 P**

(43) Veröffentlichungstag der Anmeldung:
**05.09.2018 Patentblatt 2018/36**

(73) Patentinhaber: **BASF Coatings GmbH**
**48165 Münster (DE)**

(72) Erfinder:
- **BISCHOFF, Guido**
  **48317 Drensteinfurt (DE)**
- **SCHMITZ, Martin**
  **48317 Drensteinfurt (DE)**
- **BAUGHMAN, Donald R.**
  **Perrysburg, OH 43551 (US)**

(74) Vertreter: **BASF IP Association**
**BASF SE**
**GBI-C006**
**67056 Ludwigshafen (DE)**

(56) Entgegenhaltungen:
**EP-A1- 2 161 555      WO-A1-2006/030028**
**WO-A2-2012/177508**

- **SPEHL J ET AL: "APPLICATION OF BACKPROPAGATION NETS FOR COLOR RECIPE PREDICTION AS A NONLINEAR APPROXIMATION PROBLEM", INTERNATIONAL CONFERENCE ON NEURAL NETWORKS/ WORLD CONGRESS ON COMPUTATIONAL INTELLIGENCE. ORLANDO, JUNE 27 - 29, 1994; [PROCEEDINGS OF THE INTERNATIONAL CONFERENCE ON NEURAL NETWORKS (ICNN)], NEW YORK, IEEE, US, Bd. 5, 27. Juni 1994 (1994-06-27), Seiten 3336-3341, XP000532724, ISBN: 978-0-7803-1902-8**
- **KIRCHNER, RAVI: "Predicting and measuring the perceived texture of car paints", PROCEEDINGS OF THE 3RD INTERNATIONAL CONFERENCE ON APPEARANCE ''PREDICTING PERCEPTIONS, 17. April 2012 (2012-04-17), XP55152566, in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Ermitteln bzw. zum Vorhersagen von Texturparametern eines Lacks sowie ein entsprechendes Computerprogramm zur Durchführung des vorgestellten Verfahrens auf einer Recheneinheit.

In der Automobilindustrie sind Lackierungen, welche sogenannte Effektpigmente enthalten, weit verbreitet. Effektpigmente sind bspw. Metalleffektpigmente oder Interferenzpigmente. Sie verleihen einem Lack zusätzliche Eigenschaften wie z. B. winkelabhängig Farbton- und Helligkeitsänderungen. Das bedeutet, dass sich der Farbton bzw. die Helligkeit des jeweiligen Lacks in Abhängigkeit von einem Betrachtungswinkel ändert. Effektpigmente führen zu einer visuell wahrnehmbaren Granularität bzw. Körnigkeit (engl. coarseness) und zu Funkeleffekten (engl. sparkle effect) ["Coloristik für Lackanwendungen (Farbe und Lack Edition)", Tasso Bäurle et al., gebundene Ausgabe - 14. März 2012]. Diese Effekte werden auch als visuelle Textur bezeichnet.

Zur Charakterisierung von Effektlacken werden derzeit zwei Techniken eingesetzt.

In der ersten Technik wird eine jeweilige Lackoberfläche mit einer Lichtquelle beleuchtet und unter verschiedenen Winkeln die spektrale Reflexion gemessen. Aus den erhaltenen Messwerten und der Strahlungsfunktion der Lichtquelle können Farbwerte, z. B. CIEL*a*b* berechnet werden [ASTM E2194 "Standard Test Method for Multiangle Color Measurement of Metal Flake Pigmented Materials", ASTM E2539 "Standard Test Method for Multiangle Color Measurement of Interference Pigments"].

Bei der zweiten Technik wird unter definierten Lichtbedingungen und Winkeln die Lackoberfläche fotografiert. Aus den Bildern können dann die visuelle Textur beschreibende Texturparameter berechnet werden. Beispiele für Texturparameter sind die Texturwerte G diffuse bzw. Gdiff (Graininess bzw. Körnigkeit), Si (Sparkle intensity bzw. Glitzerintensität) und Sa (Sparkle area bzw. Glitzerbereich), wie sie von der Firma Byk-Gardner ["Beurteilung von Effektlackierungen, Den Gesamtfarbeindruck objektiv messen", Byk-Gardner GmbH, JOT 1.2009, Vol. 49, Issue 1, pp. 50-52] eingeführt wurden. Die Texturwerte von Byk-Gardner werden aus Graustufenbildern ermittelt. Es ist auch möglich, Texturwerte individuell für unterschiedliche Farbkanäle eines Farbbildes zu bestimmen, z. B. für einen Rot-, einen Grün- und einen Blau-Kanal.

In einer Farbrezepturrechnung wird versucht, eine Farbvorlage mittels einer Mischung verfügbarer Farbmittel nachzustellen, indem die erforderlichen Farbmittelkonzentrationen berechnet werden. Eine notwendige Voraussetzung in der Farbrezepturrechnung ist die Vorhersage der spektralen Reflexion einer jeweiligen Farbformulierung. Unter einer Farb- bzw. Lackformulierung bzw. - rezeptur ist im Rahmen der vorliegenden Offenbarung eine spezifische Zusammensetzung verschiedener Farbmittel bzw. Farbkomponenten mit bestimmten jeweiligen Farbmittelkonzentrationen zu verstehen. Das heißt, dass eine Farb- bzw. Lackformulierung eine Art Stückliste, d.h. eine mengenmäßige Zusammensetzung eines Lacks aus seinen Einzelkomponenten, d.h. seinen einzelnen Farbkomponenten definiert.

Eine gängige Methode ist die Berechnung von Reflexionsspektren auf Basis von physikalischen Modellen (bspw. Kubelka-Munk Gleichung). In diesen Verfahren werden für jedes Farbmittel auf Basis von Ausfärbungen bekannter Farbmittelzusammenstellungen mittels des physikalischen Modells optische Konstanten bestimmt. Diese optischen Konstanten sind modellabhängig und charakterisieren das entsprechende Farbmittel. Beispiele für die optischen Konstanten sind die Parameter K und S der Kubelka-Munk Gleichung, welche die Absorption (Parameter K) und Streuung (Parameter S) beschreiben. Sind für alle einzusetzenden Farbmittel die optischen Konstanten bestimmt, so kann mit dem physikalischen Modell die spektrale Reflexion einer beliebigen Farbformulierung berechnet werden.

Zum Mischen eines Lacks, wie bspw. eines Farblacks für ein Fahrzeug, werden in der Regel Farbformulierungen verwendet, die ein Mischungsverhältnis jeweiliger Farbkomponenten zueinander angeben, um einen Lack mit einem gewünschten Farbeffekt zu erzeugen. Für eine Replikation eines Effektlacks, wie bspw. eines Metalliclacks, werden als Beschreibung der optischen Eigenschaften einer entsprechenden Farbtonvorlage neben den spektralen Reflexionseigenschaften zusätzlich objektive Texturparameter, wie bspw. Körnigkeit oder Grobheit benötigt.

Zur Vorhersage visueller Texturparameter von derartigen Effektlacken auf Basis von Rezepturdaten werden, wie voranstehend erwähnt, traditionellerweise regressionsbasierte Verfahren verwendet. Dabei werden für eine Lackformulierung charakteristische Parameter, wie bspw. eine Konzentration von in einem Lack enthaltener Pigmenttypen, wie bspw. von Metalleffektpigmenten und Interferenzpigmenten, eine spektrale Reflexion, vorhergesagt durch ein physikalisches Modell, oder aus jeweiligen optischen Konstanten des physikalischen Modells abgeleitete Größen berechnet. Eine lineare Kombination dieser Parameter bildet dann ein statistisches Modell zur Vorhersage der visuellen Texturparameter. Die Koeffizienten der Linearkombination werden durch eine Regressionsanalyse ermittelt, wie bei Kirchner, Ravi "Predicting and measuring the perceived texture of car paints", Proceedings of the 3rd international conference on Appearance "Predicting Perceptions", Edingburgh 17-19 April 2012 beschrieben.

Eine Vorhersage der visuellen Texturparameter einer Effektlackierung kann auch durch Verwendung künstlicher neuronaler Netze erfolgen.

Ein dabei zu verwendendes neuronales Netz beruht auf einem als Backpropagation bezeichneten Lernverfahren. Die Neuronen des neuronalen Netzes sind in Schichten angeordnet. Dabei umfasst sind eine Schicht mit Eingabeneuronen (Eingangsschicht), eine Schicht mit Ausgabeneuronen (Ausgangsschicht) und eine oder mehrere innere Schichten. Die Ausgabeneuronen sind die vorherzusagenden visuellen Texturparameter der Lackformulierung, also die voranstehend bereits erwähnten Parameter Si, Sa und Gdiff.

Zur Vorhersage der spektralen Reflexion einer Effektlackformulierung wird, wie bereits erwähnt, ein physikalisches Modell verwendet.

In einem ersten bekannten Lösungsansatz werden als Eingabeparameter bzw. Eingabeneuronen des neuronalen Netzes die Konzentrationen der in der jeweiligen zu betrachtenden Lackformulierung verwendeten Farbmittel bzw. Farbkomponenten und das durch ein physikalisches Modell vorhergesagte Reflexionsspektrum verwendet.

Eine Verwendung von Konzentrationen einzusetzender Farbmittel als Eingabeparameter hat jedoch mehrere Nachteile:

- Die Anzahl der Farbmittel in einer Lackreihe ist sehr hoch, so dass die Anzahl der Neuronen in der Eingangsschicht des neuronalen Netzes sehr groß ist. Für eine genaue Vorhersage der Texturparameter werden viele Trainingsdaten benötigt.

- Bei jeder Änderung der Lackreihe muss das neuronale Netz neu definiert, trainiert und getestet werden. Dies bedeutet einen erheblichen Verwaltungsaufwand.

- Der Aufwand für das Hinzufügen eines weiteren Farbmittels in eine Lackreihe ist groß: bei neuen Farbmitteln müssen zahlreiche Ausmischungen als Grundlage für das Training des neuronalen Netzes erstellt werden.

Aus dem US Patent US 6,714,924 B1 ist ein Verfahren und eine Vorrichtung zum Farbabgleich bekannt, bei welchen neuronale Netze eingesetzt werden. Dabei wird die Farbe einer Standardfarbe durch Farbwerte ausgedrückt, wobei die Eingangssignale des verwendeten neuronalen Netzes auf Farbgrundstoffe bezogen sind. Ferner werden gewichtete Verbindungen zwischen den Eingangsknoten der Eingangsschicht des neuronalen Netzes mit den Ausgangsknoten der Ausgangsschicht des neuronalen Netzes vorgesehen. Dabei bestimmen erste gewichtete Verbindungen den jeweiligen Beitrag der Farbgrundstoffe der Eingangsschicht zu jeder der Ausgangsfarbkomponente.

Aus der US 2009/0157212 A1 ist ein Verfahren und ein System zum Bestimmen einer Farbformulierung mit einem Effektpigment bekannt. Das System umfasst ein Rauigkeit bzw. Rauheits-Messinstrument, das benachbart zu der lackierten Oberfläche, wie bspw. der eines Fahrzeugs, platziert werden muss, wobei ein Techniker die Anzeige mit der lackierten Oberfläche vergleicht, um eine Rauigkeit bzw. Rauheit des Effektpigments zu bestimmen.

EP 2 161 555 A1 beschreibt ein Verfahren zum Erstellen einer Datenbank zum Suchen nach einer Lackfarbe mit einer gewünschten Textur, ein Suchverfahren unter Verwendung der Datenbank sowie Systeme, Programme und Aufzeichnungsmedien zum Ausführen des Verfahrens und der Suche. Das Verfahren zum Erstellen einer Datenbank umfasst einen Schritt zum Speichern von spektralen Reflexionsdaten und Mikrobrillanzdaten mehrerer Lackfarben nach dem Zuordnen aller spektralen Reflexionsdaten und aller Mikrobrillanzdaten zu einem Lackfarbcode; einen Schritt zum Speichern von Texturbewertungswerten von Beispiellackfarben nach dem Zuordnen jedes Texturbewertungswerts zum Lackfarbcode; wobei die Texturbewertungswerte von erfahrenen Designern vorgegeben werden, einen Schritt zum Berechnen charakteristischer Größen der Lackfarben, die Texturen ausdrücken, unter Verwendung der spektralen Reflexionsdaten und der Mikrobrillanzdaten und zum Speichern der charakteristischen Größen nach dem Zuordnen jeder charakteristischen Größe zum Lackfarbcode; einen Schritt zum Ausführen eines Prozesses zum Trainieren eines neuronalen Netzwerks unter Verwendung der charakteristischen Größen und der Texturbewertungswerte der Farbproben als Trainingsdaten; und einen Schritt zum Eingeben charakteristischer Größen der Lackfarben außer den Beispiellackfarben in das neuronale Netzwerk nach dem Trainingsprozess und zum Speichern von Ausgabedaten nach dem Zuordnen aller Ausgabedaten zum Lackfarbcode.

WO 2012/177508 A2 beschreibt ein Verfahren zum Erzeugen eines oder mehrerer vorhergesagter Zielglanzwerte einer Zielbeschichtungszusammensetzung. Dabei kann ein künstliches neuronales Netzwerk zum Einsatz kommen. Das beschriebene Verfahren kann zur Farb- und Aussehensanpassung in der Beschichtungsindustrie verwendet werden, einschließlich Beschichtungen für die Erstausrüstung von Fahrzeugen (OEM) und Reparaturlackierungen.

Spehl J et al. "Application of backpropagation nets for color recipe prediction as a nonlinear approximation problem", international conference on neural networks / world congress on computational intelligence, Orlando, June 27-29, 1994 [proceedings of the international conference on neural networks (ICNN)], New York, IEEE, US, Bd. 5, 27. Juni 1994, Seiten 3336-3341, beschreibt eine Farbformulierungsvorhersage und wie dabei ein Backpropagation-Netz verwendet wird, um auftretende Nichtlinearitäten zu überwinden.

Vor diesem Hintergrund wird ein Verfahren zum Ermitteln bzw. Vorhersagen von visuellen Texturparametern eines Lacks mit einer bekannten Lackformulierung gemäß Anspruch 1 vorgestellt.

Die Formulierung "ein Wert mindestens einer [...] Kenngröße" wird dem neuronalen Netz "als mindestens ein Eingangssignal übermittelt" soll im Rahmen der vorliegenden Beschreibung bedeuten, dass sowohl der Wert der Kenngröße selbst als auch eine auf Basis von diesem Wert der Kenngröße ermittelte Grö-ße als Eingangssignal dienen kann und dem neuronalen Netz bereitgestellt wird.

Unter einer bekannten Lackformulierung ist eine Farbrezeptur mit bekannten Konzentrationen darin umfasster bzw. verwendeter Farbkomponenten zu verstehen.

Im Folgenden werden die Begriffe "Wert einer Kenngröße" und "Kenngröße" synonym zueinander verwendet. Das bedeutet, dass im Folgenden "Wert der mindestens einen Kenngröße" und "die mindestens eine Kenngröße" gleichbedeutend zu verstehen sind. Gleiches gilt für "Werte der visuellen Texturparameter" und "visuelle Texturparameter".

Ausgestaltungen der Erfindung ergeben sich aus der Beschreibung und den abhängigen Ansprüchen.

Das vorgestellte Verfahren dient insbesondere zum Ermitteln visueller Texturparameter eines Lacks mit einer bekannten Lackformulierung mittels eines neuronalen Netzes, das auf einem als Backpropagation bezeichneten Lernverfahren beruht. Backpropagation ist hier als ein übergeordneter Begriff für ein überwachtes Lernverfahren mit Fehlerrückführung zu verstehen. Es gibt verschiedene Backpropagation Algorithmen: z.B. Quickprop, Resilient Propagation (RPROP). Dabei wird ein neuronales Netz verwendet, das mindestens drei Schichten umfasst: eine erste Schicht mit Eingabeneuronen, eine n-te Schicht mit Ausgabeneuronen und n-2 innere Schichten, wobei n eine natürliche Zahl größer 2 ist. Dabei dienen die Ausgabeneuronen zur Vorhersage der visuellen Texturparameter des jeweiligen Lacks bzw. der entsprechenden Lackformulierung.

Im Rahmen der vorliegenden Beschreibung werden die Begriffe "Eingangssignal", "Eingabekomponente", "Eingangsgröße" und "Eingabeneuron" synonym verwendet.

Insbesondere ist vorgesehen, dass mittels des erfindungsgemäß vorgesehenen neuronalen Netzes jeweilige Texturparameter des Lacks auf Grundlage mindestens einer Kenngröße ermittelt werden, wobei ein Wert der mindestens einen Kenngröße bzw. die mindestens eine Kenngröße aus mindestens einer optischen Konstanten mindestens eines Teils der Anzahl Farbkomponenten der Lackformulierung bzw. des Lacks abgeleitet bzw. ermittelt wird.

Erfindungsgemäß wird der Wert der mindestens einen Kenngröße aus mindestens einer jeweiligen optischen Konstanten aller Farbkomponenten der Lackformulierung berechnet. Das bedeutet, dass mittels eines physikalischen Modells für alle Farbkomponenten der Lackformulierung jeweils die mindestens eine optische Konstante berechnet wird und auf Basis der jeweiligen optischen Konstanten aller Farbkomponenten der Lackformulierung der Wert der mindestens einen Kenngröße der Lackformulierung bestimmt bzw. berechnet wird.

Unter visuellen Texturparametern sind im Kontext der vorliegenden Erfindung Parameter, insbesondere Angaben zu Glitzereffekt, Körnigkeit oder Grobheit eines Lacks, wie bspw. Si, Sa oder Gdiff zu verstehen. Wie eingangs bereits beschrieben sind Si ("Sparkling Intensity") und Sa ("Sparkling Area") von der Firma Byk-Gardner eingeführte Parameter zur Beschreibung eines Glitzereffekts eines Lackes. Die Parameter werden aus Bilderreihen ermittelt, welche unter direkter gerichteter Beleuchtung aufgenommen wurden. Gdiff ("Graininess diffuse") ist ein von der Firma Byk-Gardner eingeführter Parameter zur Beschreibung der Körnigkeit. Der Parameter wird aus einem Bild ermittelt, welches unter diffuser Beleuchtung aufgenommen wurde. Die jeweiligen Bilder einer jeweiligen Lackoberfläche werden mit geeigneten Kameras aufgenommen, die dazu ausgelegt sind, Bilder unter unter definierter Beleuchtung aufzunehmen. Die Kameras sind in der Regel jeweils Teil eines Spektrometers.

Unter einer optischen Eigenschaft ist im Rahmen der vorliegenden Offenbarung eine Eigenschaft eines Lacks bzw. ein Wert zur Beschreibung einer Eigenschaft des Lacks zu verstehen, die bzw. der sich auf ein auf den Lack bzw. eine entsprechende Lackoberfläche auftreffendes Licht auswirkt, d. h. bspw. inwieweit dieses absorbiert oder reflektiert und wenn reflektiert, wie reflektiert wird.

Unter einem neuronalen Netz ist im Kontext der vorgestellten Erfindung ein künstliches neuronales Netz zum Ermitteln bzw. Vorhersagen von visuellen Texturparametern einer Lackformulierung eines Lacks, insbesondere eines Effektlacks zu verstehen, wobei das neuronale Netz auf einer Backpropagation beruht. Dabei werden als Eingangsgrößen bzw. -signale des neuronalen Netzes Zwischengrößen ausgewertet, welche mittels eines physikalischen bzw. mathematischen Modells aus einer jeweiligen Lackformulierung ermittelt werden. Hierzu zählen insbesondere die der jeweiligen Lackformulierung zugeordneten optischen Konstanten sowie in einer weiteren Ausgestaltung die hieraus berechneten Reflexionsparameter. Da das erfindungsgemäß bereitgestellte neuronale Netz keine direkte Verknüpfung zu den individuellen Farbkomponenten des Lacks hat, wird hierdurch das erfindungsgemäß bereitgestellte neuronale Netz weniger komplex definiert als die im Stand der Technik bislang dazu verwendeten neuronalen Netze. Während die im Stand der Technik verwendeten Trainingsdaten für ein neuronales Netz auf Rezepturdaten beruhten, d.h. auf für jede der ca. 80 bis 250 Farbkomponenten unterschiedlichen Konzentrationen, beruhen die erfindungsgemäß zu verwendenden Trainingsdaten auf optischen Eigenschaften bzw. Daten von verschiedenen bekannten Lackformulierungen. Man unterscheidet demnach nicht länger zwischen den konkreten Farbkomponenten und deren jeweiligen Konzentrationen sondern vielmehr zwischen dem von ihnen bewirkten unterschiedlichen optischen Verhalten. Da sich dieses optische Verhalten durch weniger Kenngrößen beschreiben lässt als die Zahl der verschiedenen Farbkomponenten, ist das neuronale Netz weniger komplex und benötigt daher weniger Trainingsdaten. Darüber hinaus ist das System wesentlich toleranter bzw. weniger empfindlich gegenüber Änderungen in den Farbkomponenten, d.h. im Falle von Wegfall, Änderung oder Hinzukommen von einer oder mehrerer der zur Verfügung stehenden Farbkomponenten muss das neuronale Netz nicht neu konfiguriert (Änderung der Schicht für die Eingangssignale) und trainiert werden.

Unter einer Farbkomponente ist im Kontext der vorgestellten Erfindung eine Basiskomponente eines Lacks bzw. einer entsprechenden Lackformulierung, wie bspw. ein Farbpigment oder eine Menge an Flakes zum Erzeugen eines Glitzereffekts, zu verstehen. Die Begriffe "Farbkomponente" und "Farbmittel" sind synonym zu verwenden.

Unter einem Eingangssignal ist im Kontext der vorgestellten Erfindung mindestens ein Wert zu verstehen, der als Grundlage zum Ermitteln jeweiliger Texturparameter einer Lackformulierung mittels des erfindungsgemäß vorgesehenen neuronalen Netzes dient.

Um das erfindungsgemäß vorgesehene neuronale Netz zu trainieren, werden lediglich Informationen über einer jeweiligen Kenngröße zugrundeliegende optische Eigenschaften jeweiliger Farbkomponenten von Farbvorlagen mit jeweils bekannter Lackformulierung benötigt, wobei für jede dieser Farbvorlagen deren jeweiligen Texturparameter vermessen und der jeweiligen Kenngröße bzw. dem jeweiligen Wert der Kenngröße, die bzw. der für die jeweilige Farbvorlage bestimmt wurde, zugeordnet werden. Sodann können bei Kenntnis der mindestens einen Kenngröße bzw. des Werts der mindestens einen Kenngröße einer zu betrachtenden Lackformulierung mittels des neuronalen Netzes die visuellen Texturparameter der Lackformulierung vorhergesagt bzw. ermittelt werden. Sind die visuellen Texturparameter weiterer Lackformulierungen bereits bekannt, kann die Funktionsweise des neuronalen Netzes auch immer wieder überprüft und ggf. angepasst werden, um eine möglichst exakte Vorhersage der visuellen Texturparameter zu erreichen.

Das vorgestellte Verfahren eignet sich insbesondere für eine Berechnung von Texturparametern einer gegebenen Lackformulierung, welche dann wiederum innerhalb vorhandener Rezepturalgorithmen für die Lackformulierung, insbesondere für einen Effektlack, als Qualitätsinformationen verwendet werden können.

In einer möglichen Ausgestaltung des vorgestellten Verfahrens ist vorgesehen, dass als Eingangssignal eine mittels eines physikalischen Modells berechnete spektrale Reflexion des Lacks mit einbezogen wird. Es kann eine Absorption und/oder eine Streuung, gegebenenfalls aufgesplittet in eine Vorwärtsstreuung und eine Rückwärtsstreuung des Lacks bei Bestimmung des Eingangssignals berücksichtigt werden. Es ist auch denkbar, eine mittlere Größe von in der bekannten Lackformulierung verwendeten Flakes zu berücksichtigen sowie eine Eigenschaft einer Oberflächenstruktur, die zwischen flachen Effektpigmenten (z. B. "Silberdollars") und groben Effektpigmenten (z. B. "Cornflakes") unterscheidet und eine Größe, die eine mittlere Ausrichtung der Effektpigmente in Bezug auf eine jeweilige Lackoberfläche beschreibt. Ein Transmissionskoeffizient des Lacks, der in der Regel zwischen 0 und 1 liegt, kann ebenfalls bei Ermittlung des Eingangssignals berücksichtigt werden.

Durch Verwendung von aus den Lackformulierungen und den optischen Eigenschaften, d. h. bspw. aus den optischen Konstanten, jeweiliger Farbkomponente der Lackformulierungen ermittelten Zwischengrößen bzw. Kenngrößen als Eingangssignale für das erfindungsgemäß vorgesehene neuronale Netz zur Ermittlung visueller Texturparameter der jeweiligen Lackformulierungen, kann das erfindungsgemäß vorgesehene neuronale Netz sehr allgemein definiert bzw. trainiert werden. Dies bedeutet, dass im Gegensatz zu einem spezifischen Training eines neuronalen Netzes auf eine fest vorgegebene Anzahl von Farbkomponenten, das eine sehr starre und spezifische Ausgestaltung eines jeweiligen neuronalen Netzes bedingt, ein verallgemeinertes Training auf Grundlage von optischen Eigenschaften der jeweiligen Lackformulierungen stattfinden kann. Ein verallgemeinertes Training auf Grundlage der optischen Eigenschaften bewirkt, dass ein sehr universelles neuronales Netz entsteht, das nicht spezifisch an eine fest vorgegebene Anzahl und Auswahl von Farbkomponenten angepasst ist, sondern auch bei einem Wechsel, Entfall oder Austausch jeweiliger Farbkomponente ohne zusätzliches Training zur Vorhersage jeweiliger Texturparameter einer gegebenen Lackformulierung verwendet werden kann.

Durch Verwendung von auf Basis von optischen Eigenschaften ermittelten Eingangssignalen für das erfindungsgemäß vorgesehene neuronale Netz reduziert sich ein Aufwand für ein Training des neuronalen Netzes gegenüber einem Trainingsaufwand für ein neuronales Netz auf Grundlage von Konzentrationen jeweiliger Farbkomponenten von entsprechend bekannten Lackformulierungen erheblich. Während je nach Anzahl und Art jeweiliger Farbkomponenten eine Vielzahl von Parametern bei einem Training auf Grundlage von Konzentrationen jeweiliger Farbkomponenten zu berücksichtigen sind, wird bei der Verwendung von auf Basis von optischen Eigenschaften ermittelten Eingangssignalen nur eine verhältnismäßig geringe Anzahl Parameter benötigt, die eine entsprechend geringe Anzahl von Neuronen in der Eingangsschicht, d.h. der ersten Schicht des erfindungsgemäß vorgesehenen neuronalen Netzes bedingen.

In einer weiteren möglichen Ausgestaltung des vorgestellten Verfahrens ist vorgesehen, dass, für den Fall, dass jeweilige Farbkomponenten des Lacks geändert, getauscht oder entfernt werden, die visuellen Texturparameter mit Hilfe der mindestens einen Kenngröße bzw. des entsprechenden Werts der mindestens einen Kenngröße auch ohne erneutes Training des neuronalen Netzes ermittelt werden.

Insbesondere ist vorgesehen, dass die erfindungsgemäß vorgesehene Kenngröße derart gewählt wird, dass das erfindungsgemäß vorgesehene neuronale Netz möglichst tolerant gegenüber Veränderungen in der Anzahl oder der Ausgestaltung jeweiliger Farbkomponenten eines Lacks bzw. einer Lackformulierung wird. Dazu ist vorgesehen, dass die Kenngröße bzw. die der mindestens einen Kenngröße zugrundeliegende optische Eigenschaft derart gewählt wird, dass diese möglichst abstrakt ist, d. h. nicht unmittelbar mit den Konzentrationen der jeweiligen Farbkomponenten der jeweiligen Lackformulierung verbunden ist und dennoch dazu geeignet ist, Auswirkungen der Farbkomponenten auf die visuellen Texturparameter zu beschreiben. Eine Möglichkeit für eine derartige Kenngröße ist die Wahl einer charakteristischen Größe auf Basis von optischen Konstanten einer jeweiligen Lackformulierung, wie bspw. ein mit der Konzentration der jeweiligen Farbkomponenten der Lackformulierung gewichteter Mittelwert der Absorptionskomponente K und der Streukomponente S nach der Kubelka-Munk-Theorie der einzelnen Farbkomponenten. Weitere charakteristische Größen werden aus dem mit dem vorab erwähnten physikalischen Modell vorhergesagten Reflexionsspektrum der Lackformulierung abgeleitet, z. B. die Koordinaten im L*a*b*-Farbraum.

Die erfindungsgemäß vorgesehene Kenngröße dient als Stellglied zum Einstellen einer Toleranz des erfindungsgemäß vorgesehenen neuronalen Netzes gegenüber Veränderungen im Eingangssignal des neuronalen Netzes. Wird die Kenngröße sehr eng, d. h. spezifisch an jeweilige Farbkomponenten angepasst, gewählt, wird ein entsprechendes neuronales Netz bei Änderungen in den Farbkomponenten eines jeweiligen Lacks falsche oder ungültige Texturparameter berechnen, wenn die geänderten Farbkomponenten nicht bereits Teil eines Trainingsdatensatzes des neuronalen Netzes waren. Wird die Kenngröße hingegen abstrakt, d. h. möglichst allgemeingültig gewählt, ermittelt ein entsprechendes neuronales Netz auch dann verlässliche Texturparameter, wenn Veränderungen in den Farbkomponenten auftreten, die nicht Teil des Trainingsdatensatzes des neuronalen Netzes waren.

In einer weiteren möglichen Ausgestaltung des vorgestellten Verfahrens ist vorgesehen, dass die mindestens eine Kenngröße mittels eines mathematischen bzw. physikalischen Modells auf Grundlage mittels mindestens eines Sensors gemessener Parameter der Mehrzahl Farbkomponenten der Lackformulierung ermittelt wird.

Selbstverständlich kann die erfindungsgemäß vorgesehene Kenngröße auch ausgehend von einer Messung, bspw. einer Messung mit einem Spektralphotometer, mittels eines Zwischenschritts bestimmt, bspw. berechnet werden, bevor die Kenngröße als Eingangssignal für das erfindungsgemäß vorgesehene neuronale Netz verwendet wird. Dabei kann die Kenngröße selbst als Eingangssignal verwendet werden oder zum Ermitteln des Eingangssignals, bspw. über Berechnungen mittels eines physikalischen bzw. mathematischen Modells, verwendet werden.

Es ist denkbar, dass die erfindungsgemäß vorgesehene Kenngröße eine Vielzahl von Parametern, d. h. einen Satz an Parametern, umfasst. So können bspw. eine optische Konstante und ein Reflexionsspektrum einer jeweiligen Farbkomponente gemeinsam zur Bildung der erfindungsgemäß vorgesehenen Kenngröße verwendet werden.

In einer weiteren möglichen Ausgestaltung des vorgestellten Verfahrens ist vorgesehen, dass die mindestens eine optische Eigenschaft, die von der mindestens einen Kenngröße beschrieben wird, ausgewählt wird aus der folgenden Liste an optischen Eigenschaften: spektrale Reflexion eines Lacks bzw. einer Lackformulierung, optische Konstante mindestens einer Farbkomponente einer Anzahl Farbkomponenten des Lacks, mittels eines physikalischen Modells vorhergesagtes Reflexionsspektrum mindestens einer Farbkomponente des Lacks, Absorptionskomponente K nach der Kubelka-Munk-Theorie, Streukomponente S nach der Kubelka-Munk-Theorie und mindestens eine aus den jeweiligen optischen Konstanten der Anzahl Farbkomponenten des Lacks berechnete optische Kenngröße. Unter einer optischen Konstante ist bspw. ein Absorptionskoeffizient, ein Transmissionskoeffizient und/oder ein Streukoeffizient zu verstehen.

Generell sind alle technisch geeigneten Angaben zur Beschreibung optischer Eigenschaften mindestens einer Farbkomponente der Anzahl Farbkomponenten des Lacks zum Ermitteln des Werts der erfindungsgemäß vorgesehenen Kenngröße geeignet. Insbesondere ist vorgesehen, dass zum Ermitteln einer aus den jeweiligen optischen Konstanten der Farbkomponenten der Anzahl Farbkomponenten berechneten optischen Kenngröße ein gewichteter Mittelwert der jeweiligen Absorptions- und Streukoeffizienten der Farbkomponenten des Lacks verwendet wird bzw. der gewichtete Mittelwert der jeweiligen Absorptions- und Streukoeffizienten der Farbkomponenten des Lacks selbst als Kenngröße gewählt wird.

In einer weiteren möglichen Ausgestaltung des vorgestellten Verfahrens ist vorgesehen, dass als optische Eigenschaft aus den mittels des physikalischen Modells vorhergesagten Reflexionsspektren der Mehrzahl Farbkomponenten des Lacks abgeleitete Farbraumkoordinaten gewählt werden.

Farbraumkoordinaten eignen sich zur Vorhersage von Wirkungen jeweiliger Farbkomponenten auf ein Reflexionsspektrum eines jeweiligen Lacks. Entsprechend können Angaben zu Farbraumkoordinaten auch beim Ermitteln von Texturparametern eines jeweiligen Lacks verwendet werden. Als abgeleitete Farbraumkoordinaten, und entsprechend als Eingangsgrößen für das erfindungsgemäß vorgesehene neuronale Netz, können aus Reflexionswerten einer Farbkomponente, in der Regel aus jeweiligen Reflexionswerten aller Farbkomponenten einer Lackformulierung zu berechnende Werte aus der folgenden Liste an Werten oder einer Kombination daraus gewählt werden: Farbraumkoordinaten in einem L*a*b*-Farbraum, Farbraumkoordinaten in einem Rot-Grün-Blau (RGB)-Farbraum, insbesondere Farbraumkoordinaten in einem Standard-Rot-Grün-Blau (sRGB)-Farbraum. Ferner kann zusätzlich oder alternativ als Eingangsgröße für das neuronale Netz ein durchschnittlicher Reflexionswert (R-average) der Farbkomponenten der Lackformulierung und/oder ein Flopindex der Lackformulierung, der einen Helligkeits- und/oder Farbverlauf bzw. jeweilige Änderungen darin angibt, verwendet werden.

Weiterhin können als mittels eines physikalischen Modells berechnete Werte mindestens einer mindestens eine optische Eigenschaft beschreibenden Kenngröße einer Lackformulierung, d.h. mindestens einer Farbkomponente, in der Regel aller Farbkomponenten der Lackformulierung und entsprechend als Eingangsgrößen des erfindungsgemäß vorgesehenen neuronalen Netzwerks, auf optischen Konstanten basierende Werte der folgenden Liste an Werten oder einer Kombination daraus gewählt werden: Transmissionskoeffizient, Vorwärtsstreuung, Rückwärtsstreuung, mittlere Absorption und/oder mittlere Streuung nach Kubelka und Munk, und Orientierung bzw. Ausrichtung ggf. vorhanderer Flakes bzw. Glanzpigmente in Bezug auf eine virtuelle Lackoberfläche.

Es ist denkbar, eine Vielzahl verschiedener Eingangsgrößen für das neuronale Netz vorzusehen.

In einer weiteren möglichen Ausgestaltung des vorgestellten Verfahrens ist vorgesehen, dass mittels unter Verwendung des neuronalen Netzes für eine Vielzahl von vorgegebenen Lackformulierungen vorhergesagter Texturparameter auf eine Lackformulierung für einen Lack geschlossen wird, dessen Texturparameter eine geringstmögliche Abweichung zu den Texturparametern eines vorgegebenen Ziellacks zeigen.

Mittels des erfindungsgemäß vorgesehenen Verfahrens ist es möglich, Texturparameter für eine Vielzahl von vorgegebenen Lackformulierungen vorherzusagen, ohne einen jeweiligen Lack gemäß den jeweiligen Lackformulierungen herstellen zu müssen. Anhand von Texturparametern der Vielzahl von Lackformulierungen kann eine Lackformulierung aus der Vielzahl Lackformulierungen ausgewählt werden, deren Texturparameter eine geringstmögliche Abweichung zu Texturparametern eines vorgegebenen Ziellacks zeigen. Dies bedeutet, dass unter Verwendung des erfindungsgemäßen Verfahrens Texturparameter für eine Viezahl von Lackformulierungen vorhergesagt werden können, ohne dass jeweilige Lacke gemäß den jeweiligen Lackformulierungen der Vielzahl Lackformulierungen in aufwendigen Testreihen gemischt, auf Testbleche aufgetragen und optisch ge- bzw. vermessen werden müssen. Vielmehr kann unter Verwendung von mittels des erfindungsgemäßen Verfahrens ermittelten Texturparametern in einem komplett virtuellen Verfahren, bspw. zu Simulationszwecken, d. h. zur Simulation entsprechender Lacke, ausgehend von einer Vielzahl vorgegebener Lackformulierungen diejenige Lackformulierung bestimmt werden, deren Texturparameter eine geringstmögliche Abweichung zu Texturparametern eines Ziellacks zeigen.

Zur Vorhersage von Texturparametern eines Lacks auf Basis einer vorgegebenen Lackformulierung und ohne den Lack gemäß der Lackformulierung real herstellen zu müssen, werden zunächst unter Verwendung eines physikalischen Modells jeweilige optische Konstanten für die jeweiligen von der Lackformulierung umfassten Farbkomponenten und/oder aus Farbdaten berechnete Größen und daraus mindestens eine Kenngröße für die Lackformulierung bestimmt bzw. berechnet. In die Berechnung der mindestens einen Kenngröße für die Lackformulierung fließen neben den jeweiligen optischen Konstanten der Farbkomponenten in der Regel die durch die Lackformulierung vorgegebenen jeweiligen Konzentrationen der jeweiligen Farbkomponenten ein, wie dies bspw. bei dem bereits erwähnten mit der jeweiligen Konzentration der jeweiligen Farbkomponenten der Lackformulierung gewichteten Mittelwert der Absorptionskomponenten und der Streukomponenten der einzelnen Farbkomponenten nach dem Kubelka-Munk-Modell der Fall ist.

Das vorgestellte Verfahren kann insbesondere zur Simulation von Lacken verwendet werden, bei der verschiedene Lacke auf Basis der ihnen jeweils zugrunde liegenden Lackformulierungen rein virtuell miteinander verglichen werden, ohne dass entsprechende Lacke gemäß den jeweiligen Lackformulierungen gemischt und auf ein Probenblech aufgetragen werden.

Ferner betrifft die vorliegende Erfindung ein Computerprogrammprodukt mit einem computerlesbaren Medium und einem auf dem computerlesbaren Medium gespeicherten Computerprogramm mit Programmcodemitteln, die dazu konfiguriert sind, bei Ablauf des Computerprogramms auf einer Recheneinheit, alle computerimplementierten Verfahrensschritte des voranstehend beschriebenen erfindungsgemäßen Verfahrens auszuführen.

Das vorgestellte Computerprogrammprodukt dient insbesondere zur Durchführung des vorgestellten Verfahrens und das Computerprogramm kann bspw. auf einem computerlesbaren Datenträger gespeichert sein.

Weitere Vorteile und Ausgestaltungen der Erfindung ergeben sich aus der Beschreibung und der beiliegenden Zeichnung.

Die Erfindung ist anhand von Ausführungsbeispielen in den Zeichnungen schematisch dargestellt und wird im Folgenden unter Bezugnahme auf die Zeichnungen ausführlich beschrieben.

Figur 1 zeigt eine schematische Übersicht über eine Ausführungsform des erfindungsgemäßen Verfahrens.

Figur 2 zeigt eine schematische Darstellung eines Ablaufs einer weiteren möglichen Ausführungsform des erfindungsgemäßen Verfahrens.

Ausgehend von einer Farb- bzw. Lackformulierung 1 für einen Lack werden mittels eines physikalischen Modells 3 Werte von Kenngrößen 5 ermittelt, die charakteristische optische Eigenschaften des Lacks bzw. der Anzahl Farbkomponenten des Lacks bzw. zumindest eines Teils der Anzahl Farbkomponenten des Lacks beschreiben, wie bspw. eine Streukomponente S 5_1 und/oder eine Absorptionskomponente K 5_2 nach Kubelka-Munk.

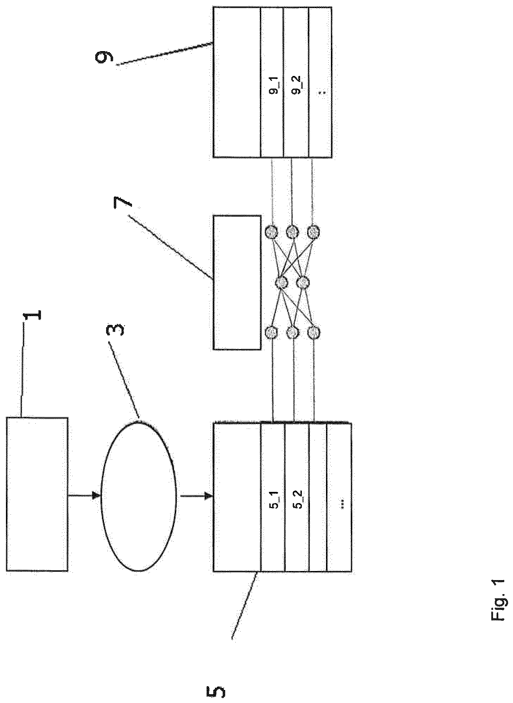

Auf Grundlage der Werte der Kenngrößen 5 werden ein oder mehrere Eingangssignale für ein erfindungsgemäß bereitgestelltes neuronales Netz 7 erzeugt. Das neuronale Netz ordnet dem Eingangssignal bzw. den Eingangssignalen und, dadurch bedingt, der Lackformulierung 1 visuelle Texturparameter 9, wie bspw. Körnigkeit 9_1, angegeben bspw. durch den Texturparameter Gdiff, und/oder Glitzereffekt 9_2, angegeben bspw. durch den Texturparameter Si, zu. Diese durch das neuronale Netz 7 vorzunehmende Zuordnung wird in Figur 1 durch die verwobenen Linien angedeutet. Entsprechend kann mittels des neuronalen Netzes 7 von der Lackformulierung 1 auf die entsprechenden Texturparameter 9 bzw. deren jeweiligen Werte geschlossen werden.

Da die Texturparameter 9 auf Grundlage von charakteristischen physikalischen, insbesondere optischen Eigenschaften, ermittelt bzw. vorhergesagt werden, ist ein exaktes Training des neuronalen Netzes 7 mit jeweiligen Konzentrationen von Farbkomponenten der Lackformulierung 1 nicht notwendig. Zum Ermitteln der Texturparameter ist vielmehr ein Wissen um charakteristische Eigenschaften der Anzahl Farbkomponenten der bekannten Farb- bzw. Lackformulierung 1 ausreichend. Dies bedeutet, dass das neuronale Netz 7 gegenüber Änderungen von Farbkomponenten der Lackformulierung 1 robust ist und lediglich Informationen über die charakteristischen physikalischen jeweiliger ggf. neu hinzugekommener Farbkomponenten benötigt, um entsprechende Texturparameter 9 zu ermitteln.

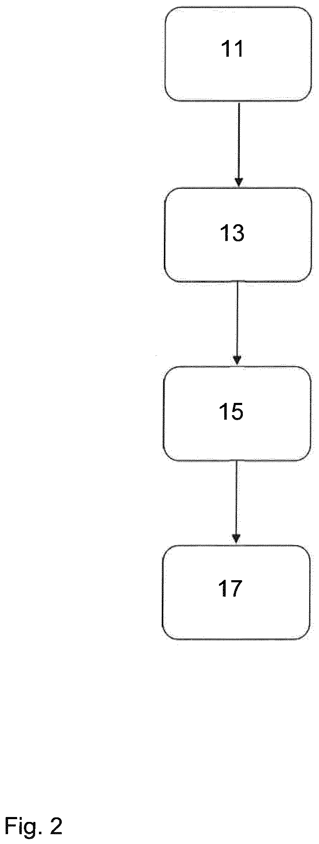

In Figur 2 ist ein Verlaufsdiagramm zur Durchführung einer Ausführungsform des vorgestellten Verfahrens dargestellt. Ausgehend von einer Lackformulierung 11 werden in einem operativen Schritt 13 mittels eines physikalischen Modells von physikalischen bzw. optischen Eigenschaften jeweiliger Farbkomponenten, wie bspw. Pigmenten oder sogenannten "Flakes", d. h. metallischen Glitzerkomponenten der Lackformulierung 11, Kenngrößen bzw. Werte von Kenngrößen von optischen Eigenschaften der jeweiligen Farbkomponenten und, darauf basierend, mindestens eine mindestens eine optische Eigenschaft der gesamten Lackformulierung 11 beschreibende Kenngröße bzw. deren Wert ermittelt. Dabei kann das physikalische Modell bspw. auf Grundlage des Modells nach Kubelka und Munk, wie es beispielhaft durch Gleichung (1) angegeben ist, gebildet werden. Um die mindestens eine Kenngröße zu berechnen, die die optischen Eigenschaften der Lackformulierung 11 beschreibt, werden optische Eigenschaften jeweiliger Farbkomponenten der Lackformulierung bestimmt und bspw. in Abhängigkeit der durch die Lackformulierung vorgegebenen Konzentrationen der jeweiligen Farbkomponenten bei der Vorhersage von optischen Eigenschaften der gesamten Lackformulierung berücksichtigt.

$$\frac{K}{S} = \frac{c_1 k_1 + c_2 k_2 + \dots\dots + c_s k_s}{c_1 s_1 + c_2 s_2 + \dots\dots + c_s s_s} \tag{1}$$

In Gleichung (1) stehen "K" für eine Absorptionskomponente bzw. einen Absorptionskoeffizienten und "S" für eine Streukomponente bzw. einen Streukoeffizienten einer Lackformulierung, "$c_1$", "$c_2$"..., "$c_s$" sind Konzentrationen jeweiliger Pigmente der Lackformulierung, "$k_1$", "$k_2$" ..., "$k_s$" sind Absorptionskoeffizienten der jeweiligen Pigmente und "$s_1$", "$s_2$" ..., "$s_s$" sind Streukoeffizienten der jeweiligen Pigmente.

Mittels des physikalischen Modells, das auf physikalischen Eigenschaften jeweiliger Farbkomponenten einer Lackformulierung basiert, können eine oder mehrere Kenngrößen ermittelt werden, die optische Eigenschaften, wie bspw. eine spektrale Reflexion eines auf Basis einer jeweiligen Lackformulierung gebildeten Lacks, eine oder mehrere jeweilige optische Konstanten von Farbkomponenten einer jeweiligen Lackformulierung, ein Reflexionsspektrum mindestens einer oder aller Farbkomponenten einer jeweiligen Lackformulierung, eine Absorptionskomponente K des Lacks nach Kubelka-Munk oder eine Streukomponente S des Lacks nach Kubelka-Munk, beschreiben.

Die in dem operativen Schritt 13 ermittelten Kenngrößen der Lackformulierung bzw. deren Werte werden als Eingangssignale bzw. Eingangsgrößen einem maschinellen Lerner in Form eines neuronalen Netzwerks, d. h. einem neuronalen Netz zugeführt.

Mittels des neuronalen Netzes, das anhand einer Vielzahl bekannter Zuordnungen von Werten jeweiliger Kenngrößen zu Texturparametern trainiert wurde, werden in einem Berechnungsschritt 15 den eingegangenen Kenngrößen bzw. den eingegangenen Werten der jeweiligen Kenngrößen gemäß einem während des Trainings ermittelten Schema Texturparameter zugeordnet. Die mittels des neuronalen Netzes den Kenngrößen bzw. den eingegangenen Werten der Kenngrößen zugeordneten Texturparameter werden in einem Ausgabeschritt 17 ausgegeben bzw. in einem Speicher hinterlegt. Dies bedeutet, dass mittels des erfindungsgemäßen Verfahrens Texturparameter für eine Lackformulierung bestimmt bzw. vorhergesagt werden können, ohne dass optische Parameter eines der Lackformulierung entsprechenden Lacks mittels eines Messgeräts bestimmt werden müssen.

Da die Texturparameter auf Grundlage von optische Eigenschaften der Lackformulierung beschreibenden Kenngrößen ermittelt werden, erfolgt die Ermittlung der Texturparameter, d. h. die Zuordnung der Texturparameter zu den Kenngrößen bzw. zu jeweiligen Werten der Kenngrößen, unabhängig von konkreten einzelnen Bestandteilen der Lackformulierung 11, wie bspw. Konzentrationsangaben von zum Mischen eines Lacks gemäß der Lackformulierung benötigten Farbkomponenten, wie bspw. Pigmenten. Aufgrund dieser Entkopplung der Ermittlung der Texturparameter von einzelnen Farbkomponenten der Lackformulierung 11 und deren Konzentrationen kann das erfindungsgemäße Verfahren auch dann mittels desselben neuronalen Netzes, d. h. ohne dass ein erneutes Training des neuronalen Netzes erforderlich ist, ausgeführt werden, wenn Farbkomponenten der Lackformulierung und/oder deren Konzentrationen geändert werden.

Die dem neuronalen Netz als Eingangsgrößen übergebenen Kenngrößen bzw. deren Werte beschreiben optische Eigenschaften eines Lacks und werden als Zwischengrößen mittels eines physikalischen Modells aus einer jeweiligen Lackformulierung ermittelt, wie bspw. die der jeweiligen Lackformulierung zugeordneten optischen Konstanten bzw. die hieraus berechneten Reflexionsparameter bzw. Absorptions- und/oder Streukomponenten. Aufgrund der auf optischen Eigenschaften basierenden Kenngrößen können die an das neuronale Netz übergebenen Eingangswerte,

d. h. die jeweiligen Werte der Kenngrö-ßen, gegenüber einem neuronalen Netz, das auf Grundlage aller verwendeten Farbkomponenten als Eingangsgrößen jeweilige Texturparameter einer Lackformulierung zuordnet, in ihrer Anzahl deutlich reduziert sein, so dass ein entsprechendes neuronales Netz weniger komplex und entsprechend effizienter, d. h. schneller und robuster, d. h. tolerant gegenüber Veränderungen in bspw. einer Lackformulierung ist als ein mit Farbkomponenten bzw. Konzentrationen der Farbkomponenten als Eingangswerten gebildetes neuronales Netz.

Durch den dem Berechnungsschritt 15 vorgeschalteten operativen Schritt 13 erfolgt eine Entkopplung des Berechnungsschritts 15 von einzelnen Bestandteilen der Lackformulierung 11. Aufgrund dieser Entkopplung werden Änderungen der Lackformulierung 11, bspw. aufgrund eines Mangels an einem Pigment nicht zu einer Änderung des neuronalen Netzes führen. Fehlt bspw. eine Farbkomponente der ursprünglich vorgegebenen Farbformulierung bzw. wird diese durch eine andere Farbkomponente ersetzt, so wird dies bereits in dem operativen Schritt 13 bei der Berechnung bzw. Bestimmung der optischen Eigenschaften der jeweiligen Farbkomponente und darauf basierend des Werts der mindestens einen Kenngröße der geänderten Lackformulierung berücksichtigt. Auch wenn sich dabei der Wert der Kenngröße ändert, ändert sich nicht die Natur bzw. Art der Kenngröße, d.h. ob es bspw. eine Absorptions- oder eine Streukomponente ist, die als Eingangsgröße für das neuronale Netz dient. Demnach muss das neuronale Netz nicht neu konfiguriert werden, es ändert sich gegebenenfalls lediglich der Wert der entsprechenden Eingangsgröße. In dem Berechnungsschritt 15 führt dies trotz einer geänderten Lackformulierung 11 zu einer entsprechend korrekten Zuordnung von Texturparametern, wie bspw. einer Glitzerintensität, d. h. einer "sparkling intensity", einer Glitzerfläche, d. h. einer "sparkling area" oder einer Verteilung einer Körnung, d. h. einer "graininess diffuse".

**Patentansprüche**

1.  Verfahren zum Vorhersagen von visuellen Texturparametern (9) eines Lacks mit einer bekannten Lackformulierung (1), bei dem auf Basis einer in der Lackformulierung (1) verwendeten Mehrzahl verschiedener Farbkomponenten mittels eines künstlichen neuronalen Netzes (7) visuelle Texturparameter (9) des Lacks ermittelt werden, wobei für die bekannte Lackformulierung (1) mittels eines physikalischen Modells (3), das auf physikalischen Eigenschaften jeweiliger Farbkomponenten einer Lackformulierung basiert, ein Wert mindestens einer mindestens eine optische Eigenschaft beschreibenden Kenngröße (5) ermittelt, der bekannten Lackformulierung (1) zugeordnet und dem künstlichen neuronalen Netz (7) als Eingangssignal zum Ermitteln der visuellen Texturparameter (9) übermittelt wird, wobei der ermittelte und der bekannten Lackformulierung zugeordnete Wert die mindestens eine optische Eigenschaft für die Lackformulierung (1) beschreibt, wobei für ein Training des neuronalen Netzes (7) Farbvorlagen mit einer jeweils bekannten Lackformulierung mit einer Mehrzahl Farbkomponenten verwendet werden, wobei für jede der Farbvorlagen deren jeweiligen visuellen Texturparameter vermessen werden und einem für die entsprechende jeweilige Lackformulierung bestimmten Wert der mindestens einen Kenngröße, der die mindestens eine optische Eigenschaft für diese jeweilige Lackformulierung beschreibt, zugeordnet werden,

    wobei die visuellen Texturparameter ausgewählt sind aus der folgenden Liste an Texturparametern oder einer Kombination daraus: Glitzerintensität, Glitzerfläche oder Verteilung einer Körnung
    **dadurch gekennzeichnet dass** der Wert der mindestens einen Kenngröße für eine jeweilige Lackformulierung berechnet wird, indem mittels des physikalischen Modells für alle Farbkomponente der jeweiligen Lackformulierung jeweils mindestens eine optische Konstante berechnet wird und auf Basis der jeweiligen optischen Konstanten aller Farbkomponenten der Lackformulierung der Wert der mindestens einen Kenngröße der Lackformulierung berechnet wird, und
    das künstliche neuronale Netz (7) keine direkte Verknüpfung zu individuellen Farbkomponenten eines jeweiligen Lacks hat und die zu verwendenden Trainingsdaten lediglich auf der mindestens einen optischen Eigenschaft von verschiedenen bekannten Lackformulierungen beruhen.

2.  Verfahren nach Anspruch 1, wobei als Eingangssignal eine mittels des physikalischen Modells (3) berechnete spektrale Reflexion und/oder eine Absorptionskomponente und/oder eine Streukomponente des Lacks verwendet wird.

3.  Verfahren nach Anspruch 1 oder 2, wobei, für den Fall, dass ein oder mehrere Farbkomponenten der Lackformulierung des Lacks geändert, getauscht oder entfernt werden, die visuellen Texturparameter (9) des Lacks ohne erneutes Training des neuronalen Netzes (7) ermittelt werden, wobei für die neue bekannte Lackformulierung des Lacks ein neuer Wert der mindestens einen die mindestens eine optische Eigenschaft beschreibenden Kenngröße (5) ermittelt, der neuen bekannten Lackformulierung zugeordnet und dem neuronalen Netz (7) als Eingangssignal zum Ermitteln der visuellen Texturparameter (9) übermittelt wird, wobei der neue Wert der mindestens einen die mindestens eine optische Eigenschaft beschreibenden Kenngröße (5) die mindestens eine optische Eigenschaft für die neue bekannte Lackformulierung beschreibt.

4. Verfahren nach einem der voranstehenden Ansprüche, bei dem für die jeweiligen bekannten Lackformulierungen der jeweilige Wert der mindestens einen Kenngröße mittels des physikalischen Modells (3) auf Grundlage mittels mindestens eines Sensors gemessener Parameter der für die jeweilige bekannte Lackformulierung verwendeten Mehrzahl Farbkomponenten ermittelt wird.

5. Verfahren nach einem der voranstehenden Ansprüche, bei dem als mindestens eine aus den optischen Konstanten der Mehrzahl Farbkomponenten einer jeweiligen Lackformulierung berechnete optische Kenngröße (5) ein gewichteter Mittelwert von jeweiligen Absorptions- und Streukoeffizienten der Mehrzahl Farbkomponenten der jeweiligen Lackformulierung gewählt wird.

6. Verfahren nach einem der voranstehenden Ansprüche, bei dem als optische Eigenschaft aus den mittels des physikalischen Modells (3) vorhergesagten Reflexionsspektren der Mehrzahl Farbkomponenten der jeweiligen Lackformulierung abgeleitete Farbraumkoordinaten gewählt werden.

7. Verfahren nach einem der voranstehenden Ansprüche, bei dem mittels für eine Vielzahl von bekannten Lackformulierungen vorhergesagter Texturparameter auf eine Lackformulierung für einen Lack geschlossen wird, dessen Texturparameter eine geringstmögliche Abweichung zu jeweiligen Texturparametern eines vorgegebenen Ziellacks zeigen.

8. Computerprogrammprodukt mit einem computerlesbaren Medium und einem auf dem computerlesbaren Medium gespeicherten Computerprogramm mit Programmcodemitteln, die dazu konfiguriert sind, bei Ablauf des Computerprogramms auf einer Recheneinheit, ein Verfahren nach einem der voranstehenden Ansprüche auszuführen.

9. Computerprogrammprodukt nach Anspruch 8, bei dem das Computerprogramm auf einem computerlesbaren Datenträger gespeichert ist.

## Claims

1. A method for predicting visual texture parameters (9) of a paint having a known paint formulation (1), wherein visual texture parameters (9) of the paint are determined by means of an artificial neural network (7) on the basis of a plurality of different color components used in the paint formulation (1), where a value of at least one characteristic variable (5) describing at least one optical property is determined by means of a physical model (3), based on physical properties of respective color components, for the known paint formulation (1), is assigned to the known paint formulation (1), and is transmitted to the artificial neural network (7) as an input signal for determining the visual texture parameters (9), where the value determined and assigned to the known paint formulation describes the at least one optical property for the paint formulation (1), where color originals each with a known paint formulation having a plurality of color components are used for training the neural network (7), and, for each of the color originals, their respective visual texture parameters are measured and are assigned to a value of the at least one characteristic variable that is determined for the corresponding respective paint formulation and which describes the at least one optical property for that respective paint formulation,

   where the visual texture parameters are selected from the following list of texture parameters or a combination thereof: sparkle intensity, sparkle area, or distribution of graininess,
   **characterized in that** the value of the at least one characteristic variable is calculated for a respective paint formulation by using the physical model to calculate in each case at least one optical constant for all color components of the respective paint formulation and, on the basis of the respective optical constants for all color components of the paint formulation, calculating the value of the at least one characteristic variable of the paint formulation, and
   the artificial neural network (7) has no direct link to individual color components of a respective paint and the training data to be used are based solely on the at least one optical property of different known paint formulations.

2. The method as claimed in claim 1, where the input signal used comprises a scattering component and/or an absorption component and/or a spectral reflection of the paint that is calculated by means of the physical model (3).

3. The method as claimed in claim 1 or 2, where, in the event that one or more color components of the paint formulation of the paint are modified, replaced or removed, the visual texture parameters (9) of the paint are determined without renewed training of the neural network (7), where a new value of the at least one characteristic variable (5) describing the at least one optical property is determined for the new known paint formulation of the paint, is assigned to the new known paint formulation, and is transmitted to the neural network (7) as input signal for determining the visual texture parameters (9), where the new value of the at least one characteristic variable (5) describing the at least one optical property describes the at least one optical property for the new known paint formulation.

4. The method as claimed in any of the preceding claims, wherein, for the respective known paint formulations, the respective value of the at least one characteristic variable is determined by means of the physical model (3) on the basis of parameters, measured by means of at least one sensor, of the plurality of color components used for the respective known paint formulation.

5. The method as claimed in any of the preceding claims, wherein a weighted average of respective absorption and scattering coefficients of the plurality of color components of the respective paint formulation is selected as at least one optical characteristic variable (5) calculated from the optical constants of the plurality of color components of a respective paint formulation.

6. The method as claimed in any of the preceding claims, wherein color space coordinates derived from the reflection spectra, predicted by means of the physical model (3), of the plurality of color components of the respective paint formulation are selected as optical property.

7. The method as claimed in any of the preceding claims, wherein a paint formulation for a paint is decided on by means of texture parameters predicted for a multiplicity of known paint formulations, the paint formulation decided on being that whose texture parameters display the least-possible deviation from respective texture parameters of a mandated target paint.

8. A computer program product comprising a computer-readable medium and a computer program stored on the computer-readable medium and having program code means configured to execute a method as claimed in any of the preceding claims when the computer program is run on an arithmetic unit.

9. The computer program product as claimed in claim 8, wherein the computer program is stored on a computer-readable data carrier.

**Revendications**

1. Procédé permettant de prédire des paramètres de texture visuelle (9) d'une peinture ayant une formulation de peinture connue (1), dans lequel, sur la base d'une pluralité de différentes composantes de couleur utilisées dans la formulation de peinture (1), des paramètres de texture visuelle (9) de la peinture sont établis au moyen d'un réseau neuronal artificiel (7), dans lequel pour la formulation de peinture connue (1), au moyen d'un modèle physique (3) basé sur des propriétés physiques des composantes de couleur respectives d'une formulation de peinture, une valeur d'au moins une grandeur caractéristique (5) décrivant au moins une propriété optique est établie, est associée à la formulation de peinture connue (1) et est transmise au réseau neuronal artificiel (7) en tant que signal d'entrée afin d'établir les paramètres de texture visuelle (9), dans lequel la valeur établie et associée à la formulation de peinture connue décrit ladite au moins une propriété optique pour la formulation de peinture (1), dans lequel des modèles de couleur avec une formulation de peinture respectivement connue, comprenant une pluralité de composantes de couleur, sont utilisés pour un entraînement du réseau neuronal (7), dans lequel, pour chacun des modèles de couleur, leurs paramètres de texture visuelle respectifs sont mesurés et associés à une valeur, déterminée pour la formulation de peinture respective correspondante, de ladite au moins une grandeur caractéristique, qui décrit ladite au moins une propriété optique pour cette formulation de peinture respective,

dans lequel les paramètres de texture visuelle sont sélectionnés dans la liste suivante de paramètres de texture ou parmi une combinaison de ceux-ci : intensité de scintillement, surface de scintillement ou distribution d'une granularité,
**caractérisé en ce que** la valeur de ladite au moins une grandeur caractéristique est calculée pour une formulation de peinture respective en calculant au moyen du modèle physique pour toutes les composantes de couleur de la formulation de peinture respective au moins une constante optique respectivement, et en calculant sur la base de la constante optique respective de toutes les composantes de couleur de la formulation de peinture, la valeur de ladite au moins une grandeur caractéristique de la formulation de peinture, et
le réseau neuronal artificiel (7) ne présente aucun lien direct avec des composantes de couleur individuelles d'une peinture respective, et les données d'apprentissage à utiliser ne reposent que sur ladite au moins une propriété optique de différentes formulations de peinture connues.

2. Procédé selon la revendication 1, dans lequel une réflexion spectrale calculée au moyen du modèle physique (3) et/ou une composante d'absorption et/ou une composante de diffusion de la peinture sont utilisées en tant que signal d'entrée.

3. Procédé selon la revendication 1 ou 2, dans lequel, au cas où une ou plusieurs composantes de couleur de la formulation de peinture de la peinture seraient modifiées, échangées ou éliminées, les paramètres de texture visuelle (9) de la peinture sont établis sans réentraînement du réseau neuronal (7), dans lequel, pour la nouvelle formulation de peinture connue de la peinture, une nouvelle valeur de ladite au moins une grandeur caractéristique (5) décrivant une propriété optique est établie, est associée à la nouvelle formulation de peinture connue et est transmise au réseau neuronal (7) en tant que signal d'entrée pour établir les paramètres de texture visuelle (9), dans lequel la nouvelle valeur de ladite au moins une grandeur caractéristique (5) décrivant ladite au moins une propriété optique décrit ladite au moins une propriété optique pour la nouvelle formulation de peinture connue.

4. Procédé selon l'une quelconque des revendications précédentes, dans lequel, pour les formulations de peinture connues respectives, la valeur respective de ladite au moins une grandeur caractéristique est établie au moyen du modèle physique (3) sur la base de paramètres, mesurés au moyen d'au moins un capteur, de la pluralité de composantes de couleur utilisée pour la formulation de peinture connue respective.

5. Procédé selon l'une quelconque des revendications précédentes, dans lequel une moyenne pondérée de coefficients d'absorption et de diffusion respectifs de la pluralité de composantes de couleur de la formulation de peinture respective est sélectionnée en tant qu'au moins une grandeur caractéristique optique (5) calculée à partir des constantes optiques de la pluralité de composantes de couleur d'une formulation de peinture respective.

6. Procédé selon l'une quelconque des revendications précédentes, dans lequel des coordonnées d'espace de couleur dérivées à partir des spectres de réflexion, prédits au moyen du modèle physique (3), de la formulation de peinture respective sont sélectionnées en tant que propriété optique.

7. Procédé selon l'une quelconque des revendications précédentes, dans lequel au moyen de paramètres de texture prédits pour une pluralité de formulations de peinture connues, on conclut à une formulation de peinture pour une peinture dont les paramètres de texture présente un écart aussi faible que possible par rapport aux paramètres de texture respectifs d'une peinture cible prédéfinie.

8. Produit de programme informatique, comprenant un support lisible par ordinateur et un programme informatique stocké sur le support lisible par ordinateur avec des moyens de code programme qui sont configurés lorsque le programme informatique est exécuté sur une unité de calcul pour exécuter un procédé selon l'une quelconque des revendications précédentes.

9. Produit de programme informatique selon la revendication 8, dans lequel le programme informatique est stocké sur un support de données lisible par ordinateur.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6714924 B1
- US 20090157212 A1
- EP 2161555 A1
- WO 2012177508 A2

**In der Beschreibung aufgeführte Nicht-Patentliteratur**

- **TASSO BÄURLE et al.** Coloristik für Lackanwendungen. 14. Marz 2012
- Beurteilung von Effektlackierungen, Den Gesamtfarbeindruck objektiv messen. Byk-Gardner GmbH, Januar 2009, vol. 49, 50-52
- **KIRCHNER, RAVI.** Predicting and measuring the perceived texture of car paints. *Proceedings of the 3rd international conference on Appearance "Predicting Perceptions,* 17. April 2012
- Application of backpropagation nets for color recipe prediction as a nonlinear approximation problem. **SPEHL J et al.** international conference on neural networks / world congress on computational intelligence, Orlando, June 27-29, 1994 [proceedings of the international conference on neural networks (IC-NN). IEEE, 27. Juni 1994, vol. 5, 3336-3341